# EUROPEAN PATENT APPLICATION

(11) **EP 0 874 278 A1**
(43) Date of publication of application: **28.10.1998**
(21) Application number: 97201195.1
(22) Date of filing: 23.04.1997
(51) Int. Cl.: G03C 7/12, G02B 5/20, G02F 1/1335, C08L 43/04, C08L 101/10

(54) **Improved passivation layer on top of a colour filter array for use in a liquid crystal device**

(71) Applicant: AGFA-GEVAERT N.V., 2640 Mortsel (BE)
(72) Inventor: Loccufier, Johan, 2640 Mortsel (BE); Tahon, Jean-Pierre, 2640 Mortsel (BE); Samijn, Raf, 2640 Mortsel (BE); Ramandt, Bart, 2640 Mortsel (BE); De Clercq, Ronny, 2640 Mortsel (BE)

(57) **Abstract**

A colour filter assemblage is disclosed comprising a colour filter array, preferably prepared by photographic means, and an improved passivation layer serving as protective barrier top layer. The passivation layer consists of a organic-anorganic composite material (ORMOCER). In a preferred embodiment the composite material consists of a polymer containing a monomer functionalized with an alkoxy silane group which is further crosslinked by controlled hydrolysis and condensation with at least one metal alkoxide, most preferably an tetraalkoxysilane such as tetraethoxysilane.

The colour filter assemblage is suitable for incorporation in a liquid crystal device.

## Description

### 1. Field of the invention.

The present invention relates to a liquid crystal device (LCD) comprising a colour filter array, preferably formed photographically, with an improved passivation layer.

### 2. Background of the invention.

In the field of electronic display systems flat panel displays (FDPs) devices have become of increasing importance and are replacing older technologies such as CRTs especially due to the advent of hand-held, laptop and portable computers. FDPs can be categorized into different types, a recent survey of which can be found in chapter 3 of "Electronic displays", second edition (1996) by Sol Sherr, edited by J. Wiley and Sons. Among the so-called electroluminescent devices the most successful representative is the light-emitting diode or LED. It is a solid device emitting light upon the application of an electric field. Gas-discharge displays, also called plasma display panels use the ionisation of the gas by the application of a field across the gas and radiative recombinations of the ions and the electrons. They are used to a considerable extent as displays for portable computers and are among the leading contenders for FDP products. Still other types of flat panel display devices include vacuum fluorescent displays (VFDs), electromagnetic displays (EMDs), incandescent displays (INDs), electrochemical displays (ECDs) and electrophoretic image displays (EPIDs).

However, the most popular and widely accepted type of flat panel display device in recent times is without any doubt the liquid crystal display device or LCD which has become the market leader. Liquid crystal display devices are used nowadays in numerous applications such as clocks, household appliances, electronic calculators, audio equipment, etc. There is a growing tendency to replace cathode ray tubes by liquid crystal display devices being favoured for their smaller volume and lower power consumption. In some applications like e.g. laptop computers and pocket TV's liquid crystal display devices are even without competition.

High definition television in its ultimate version will require screen diagonals exceeding 50 inch (see P. Plezhko in the periodical Information Display September 1991, Vol. 7 no. 9, p. 19 a.f.). Although not yet in existence CRT-based 50 inch screens can be expected to be very impractical because of their weight and size. Liquid crystal technology is basically able to produce high definition television (HDTV) screens with moderate weight and size.

Liquid crystal display devices generally include two parallel spaced glass panels connected to each other, which define a sealed cavity, which is filled with a liquid crystal material. The liquid crystals exhibit a specific geometrical molecular orientation depending on their type that can be changed under influence of an electric field. More details will be found in the Detailed Description section furtheron. The glass plates are each covered with a transparent electrode layer facing the cavity which may be patterned in such a way that a mosaic of picture elements (pixels) is created or that a defined electronic pattern is created e.g. having a defined alpha-numerical shape. Finally the front and rear glass plates are at the outside covered with light polarizing elements. As a result of change in the geometrical orientation of the liquid crystal molecules due to an applied electric voltage difference between the electrodes the light tranmittance properties of a background illumination source are simultaneously changed.

Full colour reproduction is made possible by the use of a colour filter array element inside the liquid crystal display device.

Two addressing systems are used to drive the display : either a passive system or an active system.

According to the passive system in the liquid crystal device the two electrode layers are patterned in a regular array of stripes. The stripes on one plate are perpendicular to those on the other plate.

The application of a voltage across two opposing stripes causes a change in the optical properties of the liquid crystal material situated at the crossing point of the two stripes, resulting in a change of the light transmission through the energized picture element called pixel.

According to the active system, which greatly improves the performance of the liquid crystal display device, each pixel has its own individual microelectronic switch, which means that such a microswitch is connected to an individual transparent pixel electrode, the planar size of which defines the size of the pixel. The microswitches are individually addressable and are three-terminal or two-terminal switching elements.

Three-terminal switches are formed by thin film transistors (TFT). These transistors are arrayed in a matrix pattern on a glass plate which together with a glass plate carrying a transparent uniform (non-patterned) electrode layer forms a gap filled with the liquid crystal material.

With a diode or a similar two-terminal switching device the transparent electrode layer must be patterned.

To impart colour reproduction capability to the liquid crystal display device a colour filter array element is provided on one of the two glass plates. In an active matrix display, examples of which are described in US-P 5,081,004 and 5,003,302, this is usually the glass plate opposite the glass plate carrying the switching elements.

A colour filter array for full colour reproduction consists of red, green and blue patches arranged in a given order. For contrast improvement the colour patches may be separated by a black contour line pattern delineating the individual colour pixels (ref. e.g. US-P 4,987,043).

In order to prevent loss of effective voltage over the liquid crystal material the colour filter is preferably kept out of the electrical circuit which means that the transparent electrode is deposited on top of the colour filter array element.

Several techniques for making colour filter array elements have been described in the prior art.

A first widely used technique operates according to the principles of photolithography (ref. e.g. published EP-A 0 138 459) and is based on photohardening of polymers e.g. gelatin. Dichromated gelatin, doped with a photosensitizer is coated on glass, exposed through a mask, developed to harden the gelatin in the exposed areas and washed to remove the unexposed gelatin. The remaining gelatin is dyed in one of the desired colours. A new gelatin layer is coated on the dyed relief image, exposed, developed, washed and dyed in the next colour, and so on. By that wash-off and dying technique four complete operation cycles are needed to obtain a red, green and blue colour filter array having the colour patches delineated with a black contour line.

As an alternative dyeable or coloured photopolymers are used for producing superposed coloured photoresists. In the repeated exposures a great registration accuracy is required in order to obtain colour filter patches matching the pixel-electrodes. In a modified embodiment of said photoresist technique organic dyes or pigments are applied by evaporation under reduced pressure (vacuum evaporation) to form a coloured patttern in correspondence with photoresist openings [ref. Proceedings of the SID, vol. 25/4, p. 281-285, (1984)]. As an alternative a mechanical precision stencil screen has been used for patternwise deposition by evaporation of dyes onto a selected substrate (ref. e.g. Japan Display 86, p. 320-322.

According to a second technique dyes are electrodeposited on patterned transparent electrodes from a dispersion of curable binder polymers, dispersing agents and coloured pigments. For each colour a separate deposition and curing step is needed.

According to a third technique said red, green and blue dyes are deposited by thermal transfer from a dye donor element to a dye-receiving element, comprising a transparent support, e.g. glass plate, having thereon a dye-receiving layer. Image-wise heating is preferably done by means of a laser or a high intensity light flash. For each colour a separate dye transfer step must be carried out.

According to a fourth technique as described e.g. in US-P 4,271,246 a method of producing a multicolour optical filter comprises the steps of
(1) exposing a photographic material comprising a support and a single, i.e. one, black-and-white silver halide emulsion layer to light through a first pattern;
(2) developing the exposed emulsion layer with a first coupler-containing colour developer to form a pattern of a first dye; then (3) exposing an unexposed portion of said emulsion layer to light through a second pattern;
(4) developing the exposed area with a second coupler-containing colour developer to form a pattern of a second dye;
(5) repeating exposure and development to form patterns containing dyes of third and optionally subsequent colours, thereby to form colour patterns of at least two colours; and subjecting the product to a silver removal treatment after the final colour development step.

All the above described techniques have in common that they require at least three (four if the black contour pattern requires a separate step) treatment steps, and some of them require very costly exposure apparatuses to reach the desired level of registration.

By the large number of production steps and the required accuracy the manufacturing yields, i.e. the percentage of the colour filter array elements made in the factory which meet quality control standards are exceptionally low. The very costly investments could be brought down when the filter production could be simplified and yet high quality maintained.

When using a multilayer colour photographic silver halide material for multicolour filter production comparable to colour print film used in the motion picture film industry the above mentioned problems related to image registration and large number of processing steps can be avoided. From one colour negative an unlimited number of colour positives on film can be produced at a very high rate. Only one exposure for each positive is needed. A great number of exposed positives can be chemically treated at the same time in the same machine. This makes the whole process very attractive from the viewpoint of yield and investment. Such process operating with a negative colour image as original to form a complementary colour pattern on a glass substrate has been described already in published Japanese patent application (Kokai) 60-133427.

EP-A 396 824 relates to a process for the production of a multicolour liquid crystal display device comprising a liquid crystal layer essentially consisting of nematic crystals in twisted or supertwisted configuration or smectic C (chiral smectic) ferroelectric liquid crystals wherein the liquid crystal molecules are aligned in such a way that said layer shows an electrically controllable rotation of the polarization plane of the light incident on the display. Said liquid crystal layer together with a multicolour filter element is arranged between front and rear transparent electrodes for altering pixelwise the electric field over the liquid crystal layer and said electrodes are associated respectively with a front and rear light polarizer element. Said process comprises in consecutive order the steps of :
(1) providing a photographic print material that contains on a glass support a plurality of differently spectrally sensitive silver halide emulsion layers,
(2) subjecting said print material to a single step multicolour pixelwise exposure,
(3) colour processing said exposed print material producing thereby in each silver halide emulsion layer a differently coloured pixel pattern,
(4) coating said colour processed print material at its silver halide emulsion layer assemblage side with a hydrophobic water-impermeable organic resin layer, and
(5) depositing by vacuum-coating one of said electrodes on said organic resin layer serving as a covering layer for said silver halide emulsion layer assemblage.

So, before introducing said multicolour filter in the liquid crystal device the uppermost emulsion layer of the thus processed photographic print material is coated with a hydrophobic water-impermeable organic resin to form a covering layer of said resin thereon, and by vacuum-deposition on top of the thus applied resin coating a transparent electrically conducting (electrode) layer is formed.

Said resin layer on top of the colour filter array provides a good planarity and prevents the release of volatile substances from the emulsion layer during vacuum-deposition, e.g. by sputtering, of the transparent conducting layer. Usually a bake at 150 °C or even higher is needed to impart by curing a good impermeability to the resin layer.

Said resin layer is made preferably of a polymeric resin material having a high specific electric resistivity, e.g. of at least 10¹⁰ ohm.cm. This covering layer has a thickness preferably not higher than 100 µm, most preferably in the range of 1 to 10 µm.

Examples of sufficiently electrically resistive polymeric material for producing a hydrophobic water-impermeable covering layer whereon electrode material can be deposited in vacuo with good adherence are described in US 4,698,295 and US 4,668,601.

In a particular embodiment a highly water-impermeable hydrophobic covering layer on top of the colour filter array is formed by hydrophobic cross-linkable monomers or prepolymer-monomer compositions that are curable by ultraviolet light or by heat. Radiation curing proceeds preferably with ultra-violet radiation in the wavelenght range of 150 to 450 nm using monomers and prepolymers that can be polymerized and cross-linked by free-radical polymerisation with the aid of a substance that produces free radicals on UV irradiation. A survey of such substances called photoinitiators is given by S. Peter Pappas in "UV curing: Science and Technology" - Technology Marketing Corporation, 642 Westover Road, Stanford, Connecticut, USA (1979). Particularly suited photoinitiators are selected from the group of benzoin ethers, benzil ketals, acetophenone derivatives, ketoxime esters, benzophenone and thioxanthone derivatives. Suitable monomers for providing a cross-linking reaction are selected e.g. from the group of hexane diol diacrylate, silicone diacrylate, trimethylolpropane triacrylate, aliphatic and aromatic urethane acrylates, glycidyl acrylate, and mixtures of these monomers. The monomeric products are preferably solvents for the prepolymers used. Suitable prepolymers are e.g. polyester acrylates, epoxy resin acrylates, urethane acrylate and urethane diacrylate compounds examples of which are described in US 4,761,363. Monomers and prepolymers still containing free isocyanate or epoxy groups are preferred in the case of a gelatinous colour filter formed by photographic development since they make cross-links with the gelatin contained therein (ref. e.g. GB 2121812).

Examples of heat-curable organic resins and curing agents therefor are described by Ernest W. Flick in "Handbook of Adhesive Raw materials" - Noyens Publications - Park Ridge, New Jersey, USA (1982). Polyimide resins that can be heat-cured are e.g. the photo-curable polyimide resins disclosed in US-P 4,698,295. Further are mentioned epoxy resins that can be heat-cured with amines thermally set free from an amine precursor e.g. ketimine which on reacting with water yields an amine [ref. The Chemistry of Organic Film Formers by D. H. Solomon, John Wiley & Sons, Inc. (1967), p.190].

The water-impermeable hydrophobic organic resin layer may be coated from a liquid composition containing (an) evaporatable solvent(s) or may be applied onto the processed multicolour material by lamination using e.g. a heat-curable layer sandwiched originally between a polyethylene film and a protective cover sheet analogously to the type of material described in J. photogr. Sci., 18, 150 (1970).

According to still another technique the ingredients capable of forming a protective barrier layer (also called passivation layer) can be applied on top of the colour filter array by so-called spin coating. Useful ingredients suitable for spin coating and subsequent curing by heat are marketed e.g. by JSR electronics Co (Belgian daughter Co. : Geldernaakse Steenweg, 464, Leuven). A typical reaction scheme illustrating the chemical steps involved in curing of such ingredients is given below :

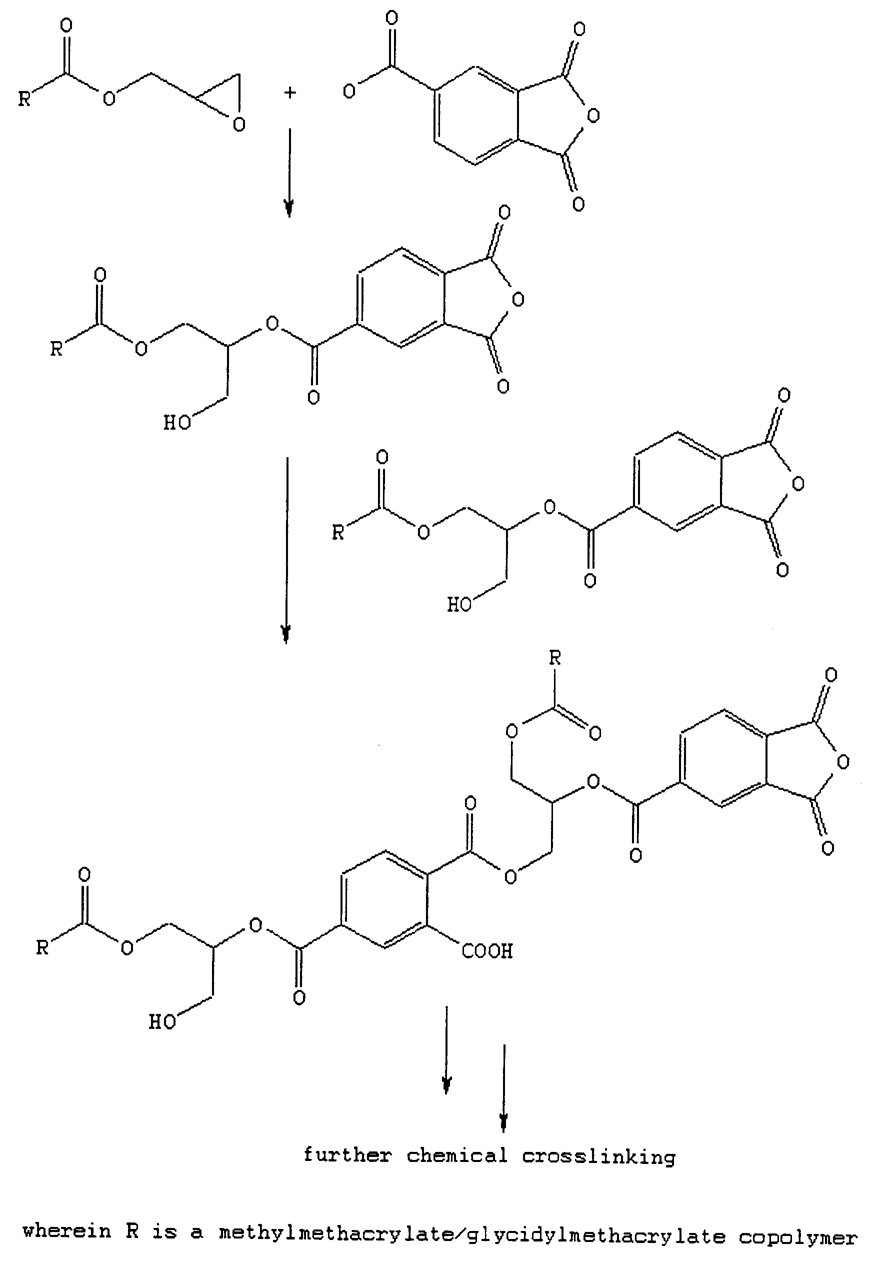

The protective barrier or passivation layers applied by one of the techniques described above must fulfil some stringent quality demands. In the first place they must show a good adherence to both the gelatinous colour filter and to the transparent electrode layer (usually an indium-tin-oxide layer or ITO) which is applied on its opposite side by vacuum evaporation or sputtering. Furtheron they must show excellent barrier properties. They must prevent the penetration into the liquid crystal cavity of volatile substances optionally present in the photographically developed colour filter.

Since gelatin is a hydrophilic polymer it contains still a small amount of water even after thorough drying. Minor quantities of water may not enter the liquid crystal cell since they profoundly disturb the operation of the liquid cristal display. Moreover, during the application of the electrode layer by vacuum-deposition water or other volatile substance may not escape from the gelatin-containing layers.

Even more important, the protective barrier layers on top of the colour filter array should be perfectly resistant to the action of etching liquids that are used in those particular LCD applications wherein a electronic pattern is engraved into the ITO layer by wet etching. Since these etching liquids are highly aggresive chemicals such as HBr or HI even minimal penetration of these liquids would easily result in degradation and decoloration of the dyes of the colour filter. Furtheron the protective barrier layer, furtheron also called the passivation layer, should give the colour filter assemblage a good even planarity. Finally the passivation layer should render the colour filter assemblage resistant to the occurrence of physical damages such as scratches.

Since existing protective barrier layers are deficient in one or more of the requirements described above it is clear that there is still a need for passivation layers with improved properties.

It is an object of the present invention to provide a colour filter assemblage based on colour development of photographic layers, said assemblage comprising a passivation layer, with improved physical properties such as scratch resistance and adhesion properties.

It is a further object of the present invention to provide a colour filter assemblage comprising a passivation layer with improved barrier properties, especially with respect to the action of aggressive etching liquids.

It is still a further object of the present invention to provide a liquid crystal display (LCD) device containing such as a colour filter assemblage with an improved passivation layer.

### 3. Summary of the invention.

The objects of the present invention are realized by providing a colour filter assemblage comprising on a transparent support,
(A) a colour filter array comprising a predefined pattern of colours,
(B) a passivation layer,
   characterized in that said passivation layer comprises as main substance an anorganic-organic composite material wherein the anorganic phase is formed by controlled hydrolysis and polycondensation of a metal alkoxide according to the sol-gel process, and the organic phase is built in during said polycondensation by means of covalent bonds.

In a most preferred embodiment this colour filter array is formed photographically by exposure according to a predefined pattern followed by colour development of three separate photographic silver halide emulsion layers coated on said support, and sensitive respectively to the three primary colours.

In a preferred embodiment the organic phase of the composite material consists of an organic polymer containing at least one monomer functionalized with an alkoxysilane group, most preferably a trialkylsilane group. Still in a preferred embodiment the metal alkoxide involved in the further crosslinking by hydrolysis and condensation is an alkoxysilane having at least two alkoxide groups; most preferably it is a tetraalkoxysilane such as TEOS (abbreviation of tetraethoxysilane or tetraethylorthosilicate).

Further belonging to the scope of the invention is a method for the preparation of a colour filter assemblage comprising the particular type of passivation layer as explained.

It is further explicitly contemplated that a liquid crystal device comprising a colour filter assemblage as disclosed also belongs to the scope of the invention.

### 4. Detailed description.

As it is clear from the summary above the gist of the present invention is the chemical nature of the main element forming the passivation layer : an inorganic-organic composite material formed according to the gel-sol technique.

The sol-gel reaction, well-known in scientific literature, describes in its original form a chemical route to synthetize inorganic polymers like glass or ceramics via a colloidal phase in solution. The basic chemistry is known since about 150 years (see Ebelmen, "Untersuchungen uber die Verbindungen der Borsaüre und Kieselsaüre mit Ether", Ann. 57 (1846), p. 319-355). The general sol-gel reaction scheme is composed of a series of hydrolysis steps in conjunction with condensation steps. During the growth reaction a colloid phase with particles or macromolecules in the nm range appear (sol) finally leading to a solid with a second phase within its pores.

More recently the sol-gel reaction has been used to prepare inorganic-organic hybrid materials. In this general reaction hydrolysis and condensation of a metal alkoxide species such as TEOS take place, and a network is formed in the process. During the build-up of this anorganic network appropriately functionalized organic moieties that can also undergo the same condensation reaction as the hydrolyzed metal alkoxides are also incorporated in the network.

Particular types of inorganic-organic hybrid materials are named ORMOCERS, ORMOSILS or CERAMERS. Scientific literature on inorganic-organic hybrid materials include :
- "The synthesis, structure and property behaviour of inorganic-organic hybrid network materials prepared by the sol-gel process", Wilkes at al., Proceedings of MRS Meeting, Boston MA, november 1989;
- "Sol-gel processes II : investigation and application", H. Reuter, Advanced Materials, 3 (1991) No 11, p. 568;
- "New inorganic-organic hybrid materials through the sol-gel approach", Wilkes et al.
- "Electrical and electrochemical applications of Ormocers", M. Popall and H. Schmidt,
- "Hybrid inorganic-organic materials by sol-gel processing of organofunctional metal alkoxides", Schubert et al., Chem. Mater. (1995), 7, p. 2010-2027.

Inorganic-organic composite materials are used in a variety of industrial applications. However, it is to our knowledge the first time that their use in passivation layers serving as protective barrier layers is disclosed.

In a short review, the general methods for the preparations of ORMOCERS will be treated.

In a lot of the composite materials, low molecular weight fragments are built in. In a first approach, the synthetic methods will be illustrated with silicates as the inorganic part. The introduction of other metal-alkoxides will be treated seperately. The most generally used strategy for the introducion of low molecular weight fragments in an ORMOCER is the condensation of functionalized trialkoxysilanes or the cocondensation of functionalised trialkoxysilanes with tetraalkoxyorthosilicates as illustrated below

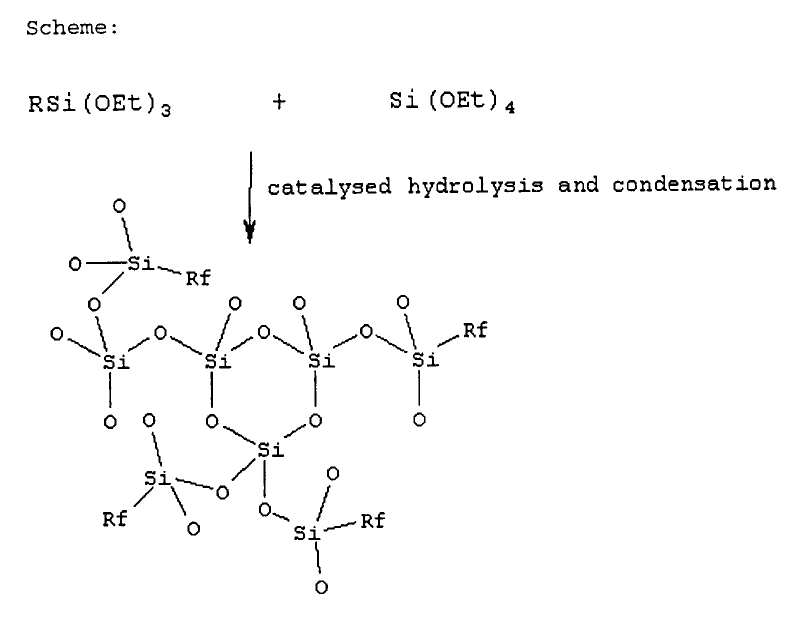

A lot of research effort has been directed towards the introduction of organic polymers into an inorganic matrix.

A first strategy is preparation of ORMOCERS in two steps. One of the fases of the composite is prepared first, e.g. the organic polymer. In a second step, the organic polymer is treated with an organic solution of the metal alkoxide. The metal alkoxide is hydrolysed and polymerized within the swollen organic polymer. Evaporating the solvent results in the final composite material. Strategies wherein the organic monomers are polymerized in an inorganic network or where the organic polymers are allowed to diffuse in the inorganic network are also known.

The former strategy has the disadvantage of possible incompatibility between the two fases, resulting in fase separation and inferiour mechanical and/or optical properties. Searching for optimized composite materials, a lot of different strategies have been published and recently reviewed by Novak (Adv. Mater., 5 (6), 422-433 (1993)). In the discussion here the Novak classification will be used. A **Type I**-ORMOCER is simply prepared by dissolving a polymer, e.g. polyvinylalcohol, and an orthosilicate followed by controlled hydrolysis and condensation of the orthosilicate. There is no deliberately introduced covalent link between the polymer and the inorganic matrix, though in the case of polyvinylalcohol a certain dergree of crosslinking can not be excluded. This strategy suffers from the same disadvantages of the first one discussed.

In a **Type II**-ORMOCER e.g. a trialkoxysilane functionalised polymer is condensed with an orthosilicate as illustrated below.

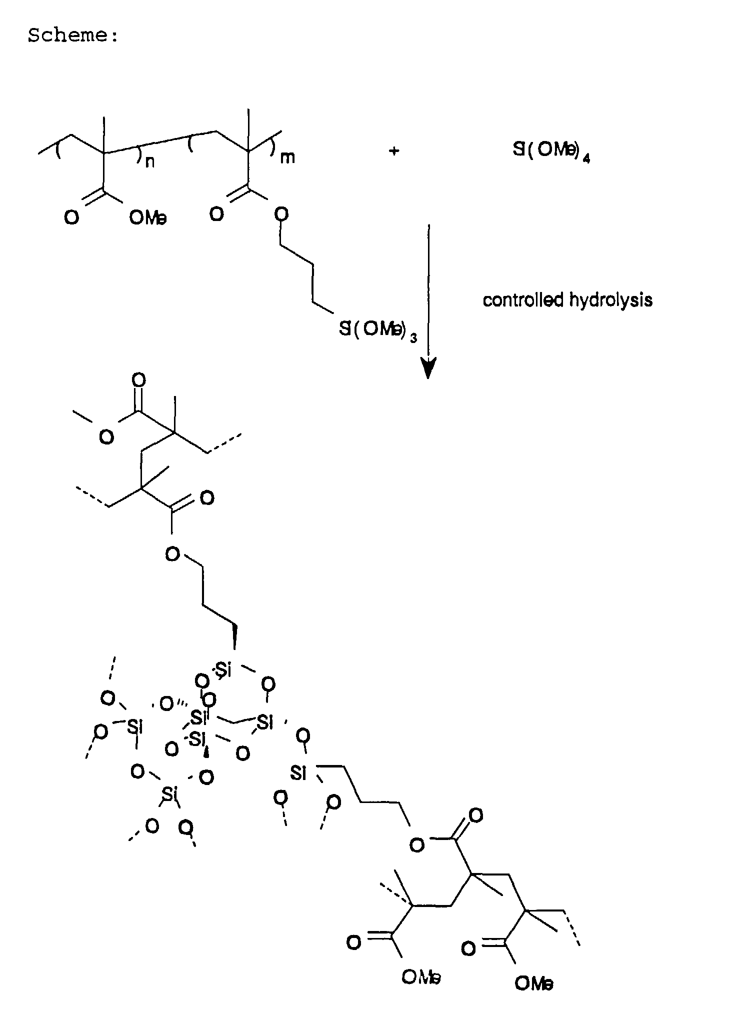

This results in a composite material with controlled covalent links between the organic and inorganic fase. Generally, the mechanical and optical properties of these composites are superior in comparison with a type I, where the kinetics of the hydrolysis and the condensation are well controlled.

A further step towards the ultimate goal of molecular homogeneity in the composite is the preparation of a **TYPE III**-Ormocer, a so called 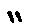 Simultaneous Interpenetrating Network*"* **SIPN**. In this type of networks the organic and inorganic polymerization occurs simultaneously. The kinetics of both polymerizations have to be very well controlled. Novak et. al. have prepared a SIPN by combining the hydrolysis of an orthosilicate with a ring opening metathesis polymerization as illustrated below.

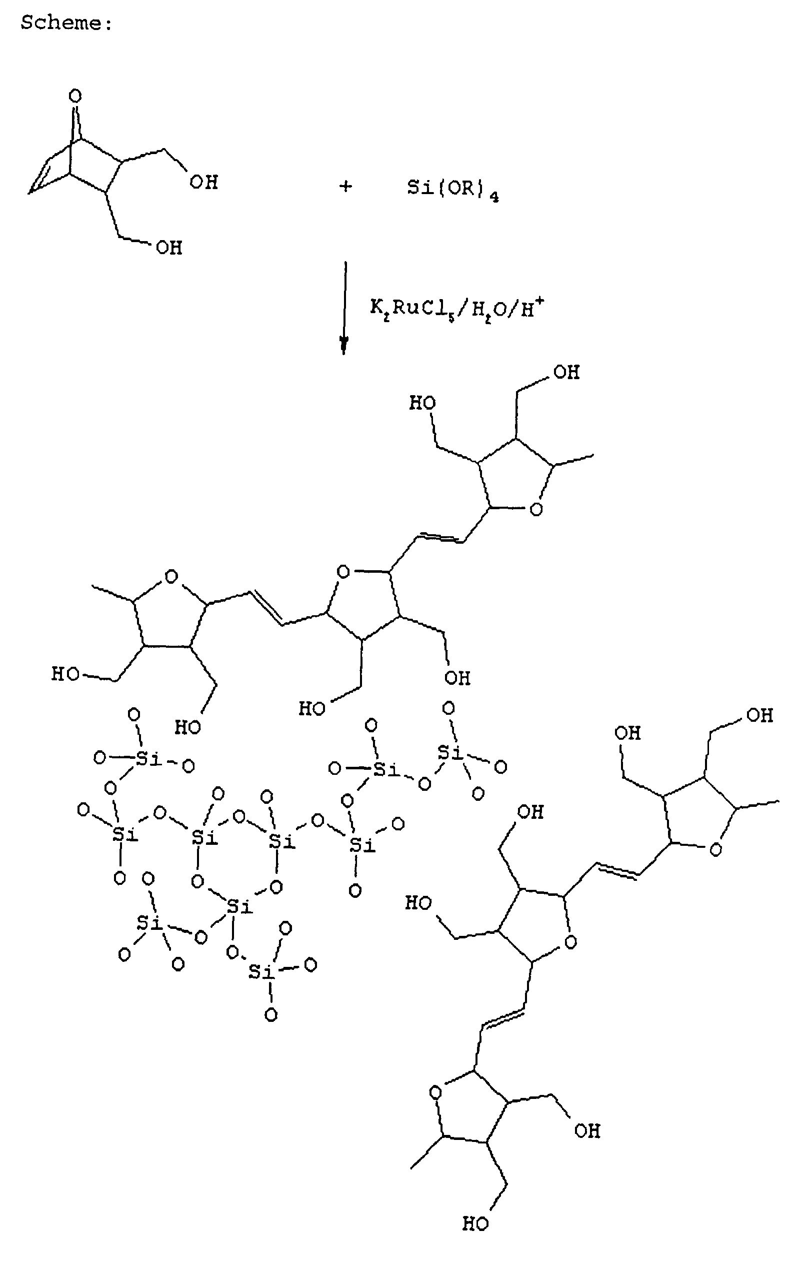

In this type of ORMOCER there is no deliberate covalent link between the organic and the inorganic fase. When extra covalent links are introduced, this type of ORMOCER is called a **TYPE-IV**-ORMOCER.

One of the major problems with ORMOCERS, especially when larger objects as e.g. lenses are prepared, is the shrinking of the ORMOCER, during the evaporation of the solvent. To solve this problem, the monomers are built in into the orthosilicates. Typical compounds used for the preparation of low shrinking ORMOCERS are given below.

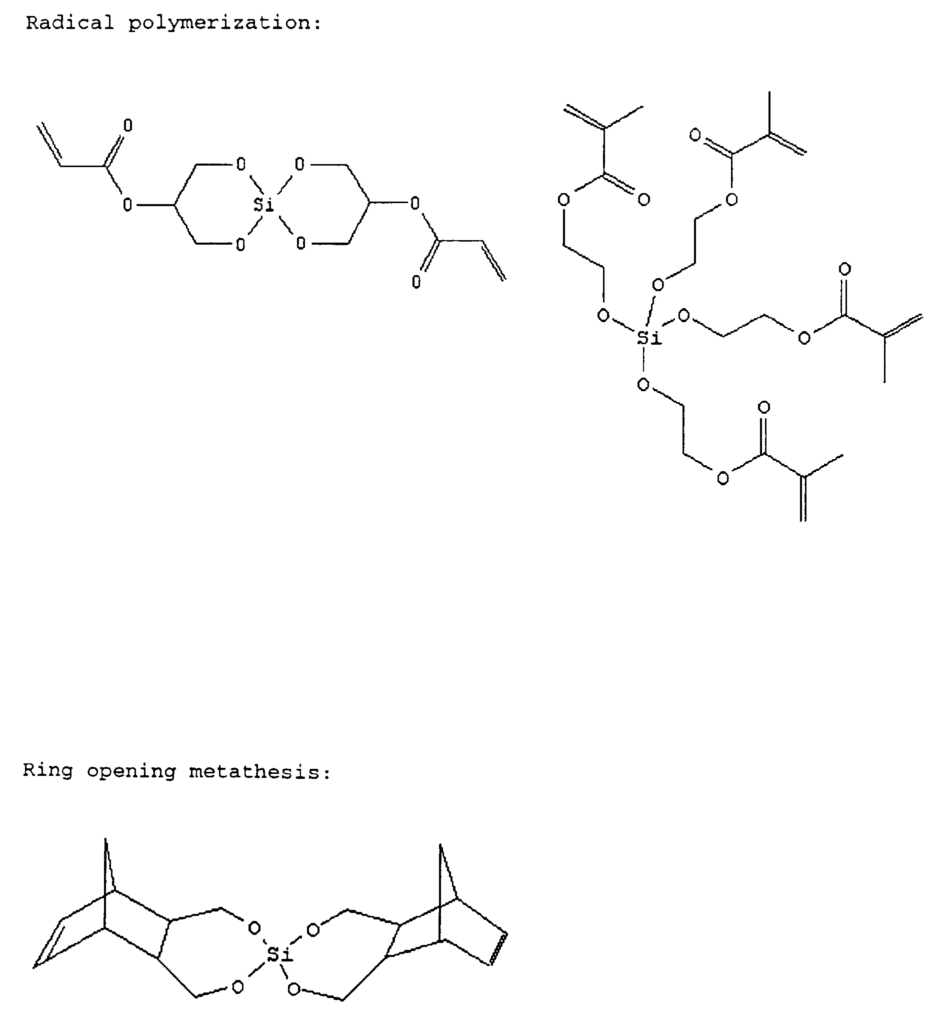

During hydrolysis, a monomer is released, which is polymerized during the preparation of the composite material. No solvent evaporation is required afterwards, resulting in a low shrinking ORMOCER. Those ORMOCERS are called a **TYPE-V**-ORMOCER The disadvantage of this approach is the low glass content in these composites. A solution for this problem has recently been published. Ellsworth and Novak described the use of modified poly(silicic acid)s for the preparation of low shrinking ORMOCERS with a high glass content (Chem. Mater. 5, 839-844 (1993)).

ORMOCERS are not limited to silicates. Other metal alkoxides such as aluminates, titanates and zirconates can be introduced into the inorganic matrix. The introduction of e.g. aluminates into an ORMOCER generally results in a harder coating, which can be desirable for certain applications. However, for the introduction of non-silicates some precautions have to be taken. The kinetics of hydrolysis and condensation of aluminates, titanates and zirconates is a lot higher than the hydrolysis and condensation of silicates. Simple cohydrolysis of e.g. aluminates results in the fast formation of seperate aluminiumoxide-fases. The obtained coatings have a fairly low transparency and the mechanical properties are inferiour, due to fase separation. The introduction of organic fragments into the inorganic matrix using e.g. aluminates or titanates is less straightforworth than in the case of silicates. The carbon-metal-bonds are unstable under sol-gel conditions in contrast with the carbon-silicon bond.

A first approach to control the hydrolysis and condensation kinetics is the partial substitution of the alkoxides by carboxylates. The carboxylates hydrolyse slower compared to the alkoxides and controlled sol-gel-chemistry becomes possible. For controlled incorporation of organic fragments using reactive metal alkoxides, coördinationcomplexes are necessary. Typical ligands are β-keto-esters, β-diketones, hydroxycarboxylic acids or aminoacids. Typical coordinationcomplexes are given below. 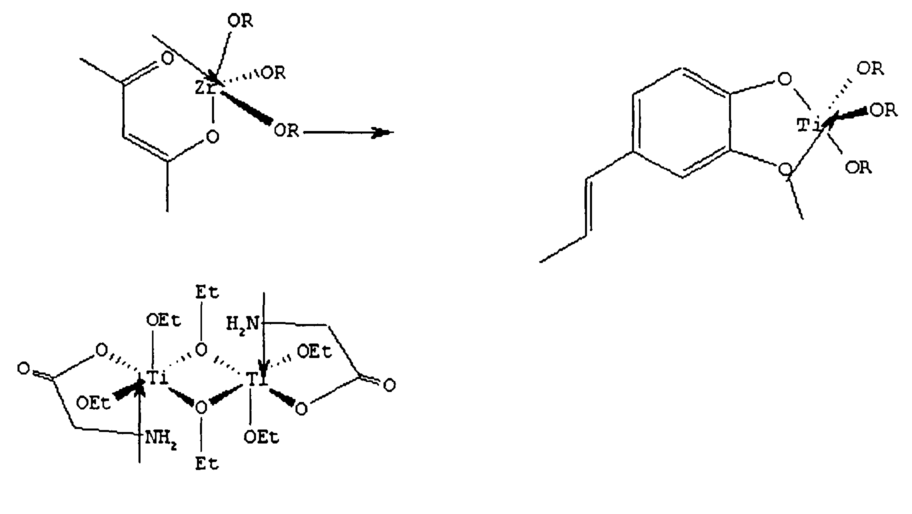 A more comprehensive discussion on the possibilities of sol-gel-chemistry for the preparation of ORMOCERS has been published by Schubert et. al. (Chem. Mater. 7, 2010-2027 (1995)) and by Wen and Wilkes (Chem. Mater. 8, 1667-1681 (1996)).

Two other approaches for the incorporation of reactive metal alkoxides have been published. Corriu et. al. described the possibility to prepare ORMOCERS, using a non hydrolytical synthesis. A typical synthetic approach used by Corriu is given below.

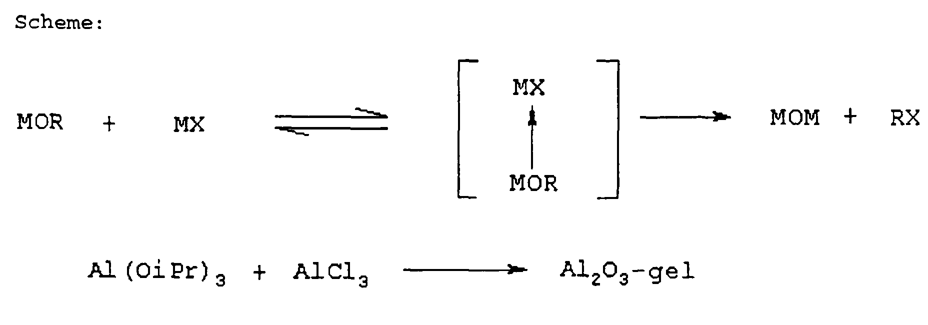

Schimdt and Seiferling used the 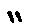 Chemical Controlled Condesation*"* or CCC to prepare ORMOCERs from reactive metal alkoxides (Mat. Res. Symp. Proc. vol. 73, 741 (1986)). This is a synthetic strategy where the hydrolysis of the metal alkoxide is coupled with a water generating reaction e.g. an esterification.

The description of synthetic approaches for ORMOCERS has not the intention to be complete nor is limiting the possible approaches to prepare the ORMOCER-coatings, serving as passivation layers on top of a colour filter array, in the present application.

According to a preferred embodiment of the present invention a particular useful passivation layer is applied on top of a colour filter array, the composition of which will be explained in detail furtheron, by a method comprising the following steps :
(1) preparing a prepolymer by radical copolymerisation of an ethylenically unsaturated monomer with another monomer functionalized with a alkoxysilane group,
(2) preparing a coating solution containing said prepolymer prepared according to step 1 and a metal alkoxide, preferably an alkoxysilane such as TEOS,
(3) applying said coating solution on top of a colour filter array as defined in claim 1 by means of spin coating,
(4) curing by further crosslinking said layer coated in step (3) by subjecting the thus obtained assemblage to a bake process.

Hydrolysis and condensation (crosslinking) starts at step (2) and are completed during step (4) . In step (2) preferably a catalyst is present. This catalyst is preferably a proton acid, such as formic acid, or a nucleophilic type catalyst such as an imidazole.

In a most preferred embodiment the prepolymer (step 1) is formed by radical copolymerisation of methylmethacrylate (MMA) and methacroyloxypropyltrimethoxysilane (MOPTMS). The reaction is performed in a dry solvent, e.g. dried on potassium carbonate, in order to avoid that hydrolysis and polycondensation would occur in this too early stage. As solvents methyethylketone, diethyleneglycoldimethylether and isobutylmethylketone can be used. The polymerisation is initiated with azobisisobutyronitrile. According to step (2) the prepolymer is mixed with TEOS and the mixture is applied by spin coating on top of a colour filter array. The thus obtained passivation layer is hardened by further crosslinking thus completing the formation of the inorganic-organic composite by subjecting the obtained assemblage to a bake process. This bake process preferably consists of two stages, being a prebake for about 5 minutes at about 80 °C, and a bake for about 1 hour at about 180 °C.

From the preceding it is clear that the multicolour filter array element is subjected to rather severe heat treatment steps. These heating steps may not give rise to discolouration of the filter and dye fading.

In another still more simple version of the composition of the passivation layer and of the method to prepare it there is no step (2) involving the addition of a separate alkoxysilane such as TEOS. The final molecule is simply built up by the controlled hydrolysis and condensation of the alkoxysilane functions in the start molecule, e.g. a prepolymer as described above. In practice this is performed as follows. A controlled amount of water is added to a solution of the prepolymer. The hydrolysis and condensation is started by the addition of a catalyst, e.g. a protonic acid. This solution can be used directly for spin coating.

In the finished passivation layer other ingredients can be present such as antioxidants and compounds improving adhesion.

We will now explain in detail the ingredients of and the way of producing the colour filter array on top of which the passivation layer is applied, according to the preferred embodiment wherein this colour filter array is produced photographically.

In principle the photographic material that will give rise to the colour filter array after photographic processing can be coated on any tranparent support such as the well-known organic resins used in the art of conventional phototechnology, e.g. a polyethylene terephthalate support. However, especially in case of the incorporation of the colour filter assemblage of the present invention into a liquid crystal device, the support is preferably a thin glass support having a thickness between 0.5 and 1.5 mm. In a most preferred embodiment the glass support is provided during coating as a continuous glass support as disclosed in EP 0 716 339. The design of the photographic colour material giving rise after processing to a colour filter array preferably resembles the design of a conventional colour positive material for motion picture theatrical exhibition and is also preferably processed after exposure by means of the standard motion picture colour positive processing ECP2 or an improvement thereof (see furtheron).

In a preferred embodiment the sequence wherein the differently spectrally sensitive silver halide emulsion layers are applied on a glass support for a photographic material that is especially useful in the method, according to this invention, for manufacturing a multicolour filter array element, is the sequence that is described in EP-A 615 161, which is incorporated herein by reference. In this application a photographic element is disclosed, wherein said element comprises on a glass support (i) a silver halide emulsion layer sensitive to blue light and containing a yellow dye forming color coupler, (ii) a silver halide emulsion layer sensitive to green light and containing a magenta dye forming color coupler, (iii) a silver halide emulsion layer sensitive to red light and containing a cyan dye forming color coupler, wherein said layer (iii) is most remote from said support and in each silver halide emulsion layer the equivalent ratio of silver halide to color coupler is at least 1.

Numerous patents deal with the chemical nature of colour couplers and their choise is in no way limited for the present application. However in a preferred embodiment the cyan forming colour coupler is chosen from the special class disclosed in EP 0 754 974. Cyan dyes with improved heat stability are obtained.

The amount of silver halide present in each colour coupler containing layer is adjusted preferably in such a way that in the strongest exposed regions the colour coupler is completely converted to dye during the colour development. This means that the equivalent ratio of silver halide to colour coupler in the colour material should be preferably at least 10 % higher than 1.

A ratio of 1 in equivalent amounts means that for each mole of colour coupler present in the layer 4 or 2 moles of silver halide are added, depending on whether the colour coupler is of the 4- or the 2-equivalent type.

In the transformation of one mole of a 4-equivalent colour coupler into one mole of dye, 4 moles of oxidized colour developer are involved, which means that 4 moles of silver halide must be reduced. In the case of a 2-equivalent colour coupler only 2 moles of silver halide are needed for a complete conversion.

In order to inhibit the diffusion of oxidized developing agent into neighbouring silver halide emulsion layers said layers are separated by an intermediary water-permeable colloid layer, e.g. gelatin-containing layer, comprising a scavenging agent for oxidized developing agent. Suitable scavenging agents for that purpose are diffusion-resistant hydroquinone derivatives, preferably containing one or more aliphatic ballast groups having at least 6 carbon atoms. Such scavenging agents and their use are described e.g. in DE-P 3 545 611.

The silver halide emulsion layer may contain any type of light-sensitive silver halide emulsion, e.g. an emulsion that forms a latent image primarily on the surfaces of the silver halide grains, or that forms an internal latent image predominantly in the interior of the silver halide grains. The emulsions can be negative-working emulsions, e.g. surface-sensitive emulsions or unfogged internal latent image-forming emulsions, or positive-working emulsions e.g. direct-positive emulsions of the unfogged, internal latent image-forming type, the development of which is conducted with uniform light exposure or in the presence of a nucleating agent. Further are mentioned direct-positive emulsions of the pre-fogged type wherein during image-wise exposure chlorine, bromine and/or iodine is liberated which image-wise destroys the developable centres created during overall prefogging. Direct-positive emulsions need only one development (as do negative emulsions).

Reversal silver halide emulsions are not prefogged. Their processing includes 2 development steps and a fogging step. The first development is carried out with a black-and-white developer whereby a negative black-and-white silver image is formed. The remaining silver halide is made developable by fogging, either physically (by exposure to light) or chemically. Upon subsequent colour development, bleaching and fixing a positive colour image is obtained.

By negative-working is meant that the density observed after processing is proportional to the exposure. By positive-working is meant that the silver halide emulsions yield upon exposure and development positive images, i.e. the density is inversely proportional to the exposure.

The applied silver halide can be of the silver chloride, the silver chloride-bromide, the silver bromide, the silver bromide-iodide or the silver chloride-bromide-iodide type.

The silver halide can be surface sensitized. Noble metal (e.g. gold), middle chalcogen (e.g. sulfur, selenium or tellurium), and reduction sensitizers, employed individually or in combination, are specifically contemplated. Typical chemical sensitizers are listed in Research Disclosure, December 1989, item 308119, section III.

The silver halide can be spectrally sensitized with dyes from a variety of classes, including the polymethine dye class, which includes the cyanines, merocyanines, complex cyanines and merocyanines (i.e. tri-, tetra-, and polynuclear cyanines and merocyanines) oxonols, hemioxonols, styryls, merostyryls, and streptocyanines; see said Research Disclosure, section IV.

Suitable vehicles for the emulsion layers and other layers of the colour material are described in section IX of said Research Disclosure and brighteners and antifoggants are described respectively in sections V and VI, and hardeners for gelatin in section X.

According to a preferred embodiment the reflections from the glass plate, being the preferred support, back into the multilayer arrangement are eliminated by the presence of a light-absorbing (anti-halation) layer between the glass substrate and the first photographic silver halide emulsion layer. This anti-halation layer must lose its light-absorbing properties during or after processing and become as clear as possible. To this end one or more dyes are present in said layer which dyes should be destroyed chemically in one or more processing liquids or simply be soluble in one or more of the processing liquids or in the rinse water and be washed out. It is advantageous to use anti-halation dyes of the non-diffusing type, i.e. dyes that are insoluble in water and do not migrate to adjacent layers during manufacture. Such is important when the dyes, due to their spectral or other properties, can change the photographic properties of the adjacent silver halide emulsion layers.

Examples of yellow dyes of the non-diffusing type that may serve in decolourizable anti-halation layers for use in a multicolour colour material according to the present invention are described in US-P 4,770,984.

Filter or anti-halation dyes may be present in one or more layers of the multilayer arrangement to decrease unwanted interlayer reflections and/or to improve the optical characteristics of individual layers. This practice is well known to those skilled in the art.

When using a glass support the multilayer arrangement of hydrophilic colloid layers of the multicolour photographic material must stick very firmly to the glass. The glass used for the substrate is e.g. borax glass, borosilicate glass, lime glass, potash glass, soda glass, crown glass, flint glass, silica-flint glass, chromium glass, zinc-crown glass or quartz glass. The glass support has e.g. a thickness in the range of 0.5 to 1.5 mm.

The so-called subbing layers currently used in colour print film on a resin support cannot be used due to the very different nature of the glass substrates.

A strong adhesion of the hydrophilic colloid multilayer arrangement to the glass support can be realized by means of a very thin subbing layer containing gelatin, a water-soluble inorganic silicon compound like e.g. sodium silicate (water glass) and a gelatin hardening agent.

An equally strong adhesion can be obtained without a subbing layer by the addition to the first layer, which in a preferred embodiment is a gelatin-containing light-absorbing anti-halation layer, of an organic silicon compound such as an epoxysilane and a hardening agent for gelatin.

When said layer after being freshly coated is treated at a temperature in the range of 34 to 40 °C and at a relative humidity in the range of 70 to 85 % the adhesion of said subbing layer towards a gelatin-containing layer such as a gelatin-silver halide emulsion layer is much improved. Particularly suitable subbing layers on the basis of organic silicon compounds are described in US-P 3,661,584 and GB-P 1,286,467.

The exposure of the photographic material giving rise to the colour filter array can be performed in several ways.

For example, the exposure may proceed in a single step through a multicolour master, in a plurality of steps with light of different colour (blue, green and red) through a pitchwise shiftable black-and-white mask or simultaneously or subsequently by means of pixelwise modulated laser beams of different colour, blue, green and red.

A convenient method for manufacturing the colour filters for use according to the present invention, especially in mass-production when a great number of them is needed, is to carry out the exposure in a single step through a multicolour master.

When used in conjunction with a negative type multilayer silver halide colour material the master must be a coloured negative master, whereas a coloured positive master is needed when a direct positive or reversal type multilayer silver halide colour material is involved.

A coloured negative master has predominantly yellow-, magenta- and cyan coloured pixels at the places corresponding respectively with the blue, green and red pixels on the colour filter array element.

In said single step exposure using a white light source the coloured master is in close or near contact with the multilayer silver halide colour material from which a colour filter is to be made, the gelatin layers of both materials facing each other. By said single step exposure simultaneously latent images in the three light-sensitive differently spectrally sensitive silver halide emulsion layers are formed.

Deviation from the desired spectral transmission characteristics of the filter area may be corrected by inserting in the white light beam filters changing the proportion of red, green and blue transmitted by the multicolour master.

The negative and positive masters may be made by means of other recording materials than silver halide emulsion type materials.

For example, the multicolour master may be made by photolithography, vacuum-deposition or electrodeposition of dyes, thermal transfer of dyes, electro(photo)graphy with coloured toner or inkjet printing with coloured inks.

After exposure the photographic material is developed in order to produce the colour filter array. Since the preferred design of the photographic material is that of a motion picture colour print material the material is most simply processed according to the standard colour positive processing known as EPC2 using the well-known developing agent CD2. However some improved variations of this process can be employed. In European patent application, appl. No. 95200306 alternative developing agents are disclosed giving rise to dyes with improved heat stability. According to EP 0 752 620 the processing comprises an additional step being a treatment in a solution comprising ions of group III element. Processed material less susceptible to yellowing under the influence of heat is obtained.

The present invention has been described in detail on the hand of its preferred embodiment wherein the colour filter array is formed photographically. However, it is explicitly contemplated that colour filter assemblages containing a colour filter array prepared otherwise also belong to the scope of the present invention. As already mentioned in the introduction part colour filter arrays can be formed on the base of dyed hardened gelatin layers, dyed resist layer, dyes applied by electrodeposition, by transfer sublimation, by ink jet printing, etc..

It is also explicitly considered that a liquid crystal display device comprising a colour filter assemblage as extensively described above belongs to the scope of the present invention. Therefore we include in this description some details about the design and operation of a liquid crystal display device. As stated above the device is in essence a cavity surrounded by two parallel glasses each covered with a transparent electrode layer in electrical connection with each other so that an electric field can be applied across the cell. Finally the electrode layers are covered with so-called alignment layers (see furtheron). The LCD differs from the competing technologies like LEDs that it is in fact not a light emiting material itsels, but rather one that requires a separate light source, which may be ambient light or a dedicated lamp, and controls the transmission or reflection of said light. This control is achieved by placing the LCD cell in the light path and altering the optical characteristics of the cell by applying electric fields across the cell by a mechanism that will be explained furtheron. This gives LCDs a number of unique characteristics, in particular the very low power to operate the cell. The low cost of the basic material makes the LCD an effective competitor for use in a wide variety of display devices ranging from simple Alpha-numeric displays to complex matrix panels.

Liquid crystals look like ordinary liquids over the temperature range but they differ from other liquids in that in the so-called mesophase temperature range they show an ordered structure and are made up of elongated organic molecules that can arrange themselves into three types of ordening called nematic, cholesteric and smectic. In the nematic type all the molecules are parallel to each other. The cholestric has consecutive layers of molecules parallel to each other, but with an alignment in each layer in a preferred direction that rotates continuously from one layer to the next thus following a helix in its ordering pattern. The smectic type has a layered structure with a constant preferred direction. Outside the mesophase the material freezes at the low end and becomes an isotropic liquid at the high end. The majority of LCDs use the nematic type, but there are examples of devices that use cholesteric, cholesteric-nematic, and smectic mixtures. In particular, certain chiral-smectic forms have been used that exhibit spontaneous polarization, and the LCDs containing this type of material are termed ferroelectric. More details on liquid crystals can be found in GB 1509643, in Scientific American, Vol. 222, April 1970, p. 100-106, and in the periodical OEP, February 1985, p. 43-47, under the headings "Spectrum Liquid Crystal Display" and "Liquid Crystal gets Second Look as a promising Display Medium".

Liquid crystals have usually rather complex chemical formulas. Crystals of the nematic type include for instance 4-methoxy-4'-n.-butylazoxybenzene (MBAB), N-(p-methoxybenzilidene)-p-n.-butylaniline (MBBA) and N-(p-ethoxybenzilidene)-p-n.-butylaniline (EBBA). Molecules of the cholesteric type include cholesteryl erucate (CE) and cholesteric nonanoate (CN).

We will now explain the operation principle of the most popular type of LCD being the Twisted Nematic Structure LCD (TN-LCD) which has find wide applications both in its original form and in its improved supertwist version. In this form the cell is constructed in such a fashion that, in the absence of an electric field, the molecular axis of the liquid crystal material is made to rotate continuously from one glass plate to the other comparable to the steps in a winding staircase. This is achieved as follows. Both electrode layers together with all the other elements facing the interiority of the LCD are covered with thin so-called alignment layers. These layers usually consist of a heat-cured polyimide resin. Rubbing these cured layer with e.g. a nylon cloth (ref. e.g. GB-P 1,505,192) in a given direction causes an orientation of the liquid crystal molecules near the surface of the layer in the rubbing direction. When both alignment layers are rubbed in directions perpendicular to each other the rotating molecular direction arrangement described above is obtained. As a result, linearly polarized light produced from a first polarizer positioned outside the first glass plate and incident on the cell is rotated in the same way and emerges from the second glass plate with its plane of polarization at 90° from the incoming light. When a second polarizer, commonly termed analyzer, is positioned behind the second glass plate, and its polarizing plane is parallel to the one of the the first polarizer then the analyzer will block the light. On the other hand, if the analyzer's polarizing plane is perpendicular to the one of the first polarizer the light will be passed.

However, when an electric field is applied between the electrodes the molecules are untwisted and all line up in the direction of the field. Now a parallel analyzer will pass the light and a right-angle analyzer will block the light. Summarizing, according to the chosen relative direction of polarizer and analyzer, a light display on a dark background, or a dark display on a light background can be realized, wich is an important advantage. Another useful feature lies in the fact that very small voltages are sufficient to line up the liquid crystal molecules. The current flowing through the cell is in the microampere range so that only microwatts of power are needed.

According to the explanation above a liquid crystal device comprising the colour assemblage of the present invention has following preferred design. A cavity containing liquid crystals, preferably of the twisted nematic type is interposed between two parallel glass plates (A) and (B). Glass plate (A) is coated with a first electrode, preferably matrix of pixel electrodes each individually connected with a polysilicon thin film transistor, and with an allignment layer. Glass plate B is coated at the side directred to the LCD cavity with processed mumticolour filter array plus a passivation layer according to the present invention, a second electrode preferably being transparent electrode e.g. made of vapour deposited indium-tin oxide (ITO), and a second alignment electrode. This complete assemblage can than be inserted bzetween two polarizers.

The present invention is now illustrated by the following examples without however being limited thereto.

### EXAMPLES

### EXAMPLE 1

### - preparation of colour filter array on top of a glass plate

Following layers were coated in the order given on sodalime glass with a thickness of 1.5 mm to form a colour photographic material.

### Anti-halation layer

A non-diffusing yellow dye of formula YD, was dispersed in gelatin. To this dispersion epoxysilane E (structure defined hereinafter) acting as an adhesion promoter was added.
The coverages of yellow dye YD, gelatin and epoxysilane E were 0.5, 1.5 and 0.1 g/m² respectively.

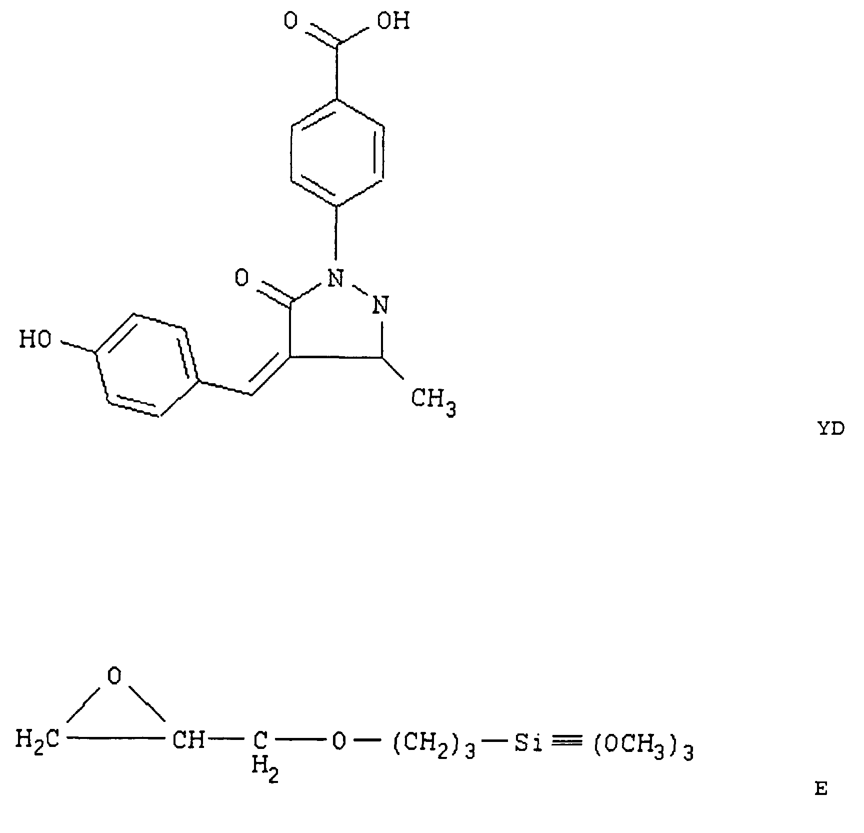

### Blue sensitive layer

A 100 % silver chloride emulsion with an average grain size of 0.4 µm was sensitized to blue light with a spectral sensitizing agent of formula SB. A yellow dye forming coupler of formula Y1 was added to this emulsion.
The amounts of silver halide, gelatine and colour coupler Y1 were 0.57, 3.30 and 1.0 g/m² respectively.

### First intermediate layer

A substance of formula SD, capable of scavenging oxidized colour developing agent was dispersed in gelatin and coated at a coverage of 0.08 g SD/m² and of 0.77 g gelatine/m².

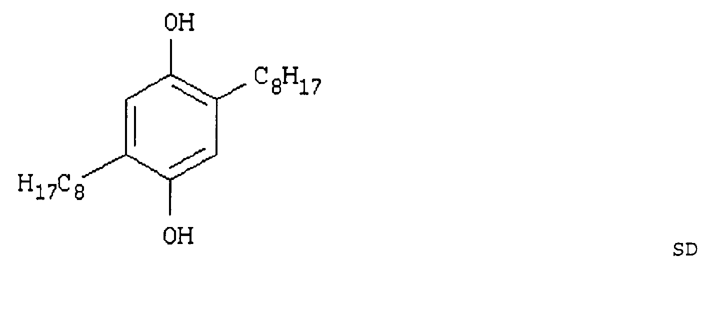

### Green sensitive layer

A silver chloride-bromide (90/10 molar ratio) emulsion with an average grain size of 0.12 µm was sensitized to green light with a spectral sensitizing agent of formula SG. A magenta dye forming coupler of formula M1 was added to this emulsion.
The amounts of silver halide, gelatin and colour coupler M1 were 0.71, 2.8 and 0.53 g/m² respectively.

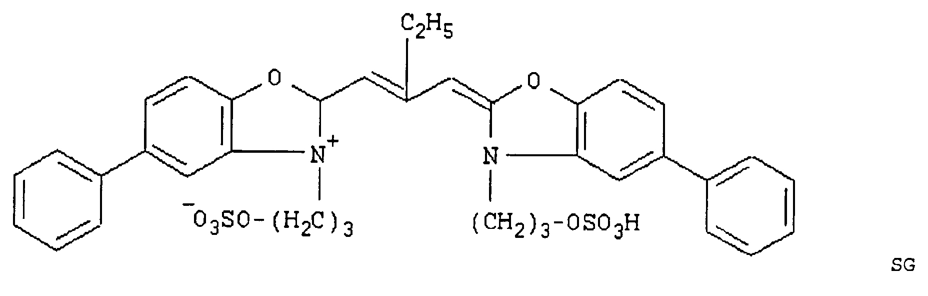

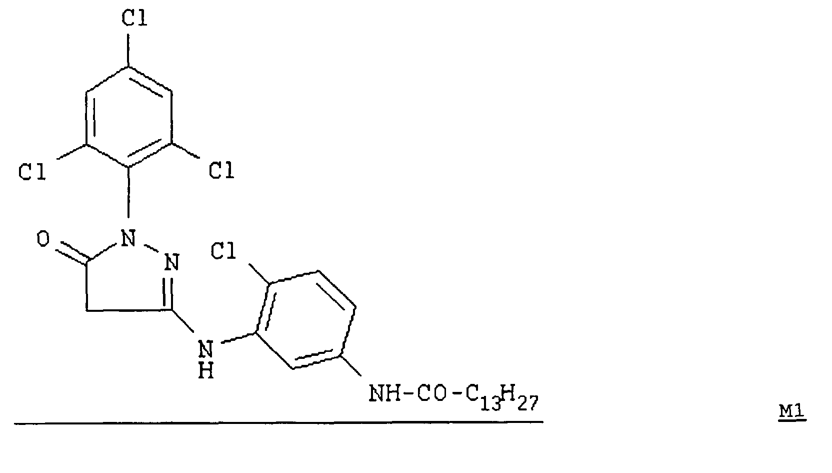

### Second intermediate layer

This layer has the same composition as the first intermediate layer.

### Red sensitive layer

A silver chloride-bromide (90/10 molar ratio) emulsion with an average grain size of 0.12 µm was sensitized to red light with a spectral sensitizing agent of formula SR. A cyan dye forming coupler of formula C1 was added to this emulsion.
The amounts of silver halide, gelatin and colour coupler C1 were 0.49, 6 and 0.95 g/m² respectively.

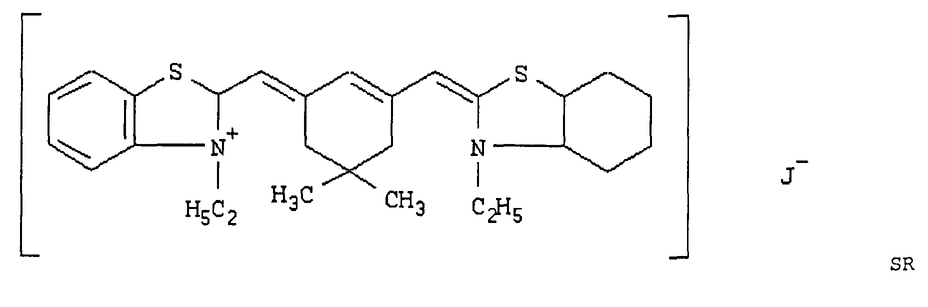

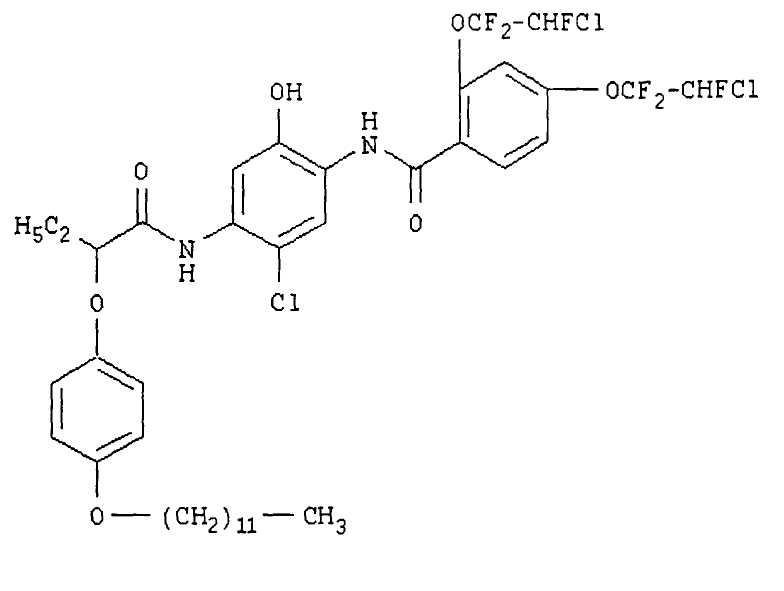

The thus completed photographic material was exposed according to a pattern comprising wedge exposures behind blue, green and red selection filters so that after processing yellow, magenta and cyan images are formed respectively. The exposed material is processed according to a modified ECP2 process, as disclosed in European patent application, appl. No. 95200306, cited above.

Instead of the conventional CD2 the colour developing agent in this modified process was p.-N-ethyl-N-isopropyl-3-methyl-phenylenediamine hydrochloride :

### - application to the colour filter array of a passivation layer according to the invention

An example of an inorganic-organic composite coating according to the present invention used as passivation layer on top of a colour filter array was prepared in four steps :
(1) synthesis of a prepolymer poly(methylmethacrylate-co-methacroyloxypropyltrimethoxysilane), abbreviated poly(MMA-co-MOPTS);
(2) preparing of a coating solution containing the prepolymer, TEOS and catalyst formic acid;
(3) application of the layer by spin-coating;
(4) a bake process.

Step (1) was carried out as follows. The reaction was performed in in a 2 litre double-walled glass cylinder, equipped with a reflux cooler, a mechanical stirrer, a thermometer and an inlet, below liquid level, for nitrogen gas. In this reaction vessel were successively added at room temperature :
800 ml of methylethylketone dried on potassium carbonate;
10 g of methacroyloxypropyltrimethoxysilane;
40 g of methylmethacrylate;
0.25 g of azobisisobutyronitrile.

The reaction mixture was continuously treated with nitrogen gas and kept free from air. The reaction mixture was stirred at 100 rpm while the temperature was raised to 79 °C. Then the reaction mixture was thermostatized at 79 °C. After 30 minutes a mixture of 10 g of methacroyloxypropyltrimethoxysilane, 160 g of methylmethacrylate and 1 g of azobisisobutyronitrile was added to the reaction mixture over a period of 2 hours. Then the solution was thermostatized for another 20 hours at 79 °C. The obtained solution of the prepolymer could be used without further purification for step 2.

In step (2) the following coating composition was prepared :

| | |
|---|---|
| prepolymer solution according to step 1 | 87.9 ml |
| TEOS | 9.3 ml |
| water | 1.4 ml |
| formic acid | 1.4 ml |
| total | 100 ml |

The viscosity of this coating composition at 36 °C was 23.3 mPa.s and the static surface tension was 25.2 mN/m.

According to step (3) 1 ml of this composition was applied by means of spincoating to a glass plate of 63 mm x 63 mm carrying a colour filter array prepared as described above. The spincoating solution was applied in the middle of the glass plate. The experimental conditions were as follows :
- spincoater : EC101-CB15 of Headway Research, Inc.
- rounds per minutes : 3000;
- duration of spincoating : 30 s.

The applied layer was subjected to a bake process (4) consisting of a prebake for 5 minutes at 80 °C and a bake for 1 hour at 150 °C.

### - application to the colour filter array of a comparison passivation layer

The coating solutions for the following comparison passivation layer were commercially obtained from JSR electronics Co.

The monomer glycidylmethacrylate was dissolved in ethylene glycol ethyletheracetate (solution A, being commercial solution OPTMER SS7265). Trimellitic acid anhydride was dissolved in in diethyleneglycol dimethylether (solution B, being commercial solution OPTMER SS0265). Solutions A and B were mixed in a ratio of 3 to 1.

This solution was applied on top of the same glass plate carrying the same colour filter array under exactly the same spincoating conditions as described for the invention sample.

In a further comparison sample no passivation layer at all was applied on top of the colour filter array.

### - physical evaluation of the invention and comparison samples

In a first test series the comparative and invention samples were subjected to an etching test in a HBr solution for respectively 3 and 10 minutes. The procentual residual yellow, magenta and cyan densities measured at Dmax, D=1 and D=0.5 compared to the original untreated colour densities of the respective colour wedges are represented in table 1.

**TABLE 1**

| Sample No. + treatment* | Dmax | yellow % residual dens. | | | Dmax | magenta % residual dens. | | | Dmax. | cyan % residual dens. | | |
|---|---|---|---|---|---|---|---|---|---|---|---|---|
| | | Dmax | D=1 | D=0.5 | | Dmax | D=1 | D=0.5 | | Dmax | D=1 | D=0.5 |
| A | 1.92 | 5 | 8 | 20 | 1.89 | 77 | 78 | 80 | 2.05 | 29 | 37 | 41 |
| B | 1.95 | 101 | 101 | 98 | 1.89 | 99 | 98 | 103 | 1.99 | 99 | 98 | 98 |
| C | 1.84 | 109 | 101 | 102 | 1.89 | 101 | 99 | 95 | 1.96 | 102 | 101 | 102 |
| D | 1.86 | 7 | 11 | 21 | 1.87 | 11 | 46 | 91 | 1.99 | 25 | 7 | 11 |
| E | 1.84 | 102 | 100 | 76 | 1.90 | 99 | 98 | 100 | 1.99 | 101 | 101 | 98 |

| | | | | | | | | | | | | |
|---|---|---|---|---|---|---|---|---|---|---|---|---|
| * : sample No. + treatment : A : blank, no passivation layer, 3 min HBr (45%) at 45 °C B : comparative passivation layer, 3 min HBr (45%) at 45 °C C : invention passivation layer, 3 min HBr (45%) at 45 °C D : comparative passivation layer, 10 min HBr (45%) at 45 °C E : invention passivation layer, 10 min HBr (45%) at 45 °C | | | | | | | | | | | | |

As it is clear from table 1 the residual densities are superior with the assemblage comprising the invention passivation layer especially after the 10 minutes HBr treatment.

In a second series of tests the scratch resistance of the invention and comparative samples were compared by means of a needle scratch test.

The results are summarized in table 2.

**TABLE 2**

| Sample* | Needle load (g) | average impression** |
|---|---|---|
| A | 8 | 3.03 |
| B | " | 1.71 |
| C | " | 1.06 |
| A | 10 | 3.92 |
| B | " | 3.28 |
| C | " | 3.16 |

| | | |
|---|---|---|
| * : A = blank, no passivation layer B = comparative passivation layer C = invention passivation layer | | |
| ** : average of 10 measurements | | |

From the results of table 2 it is clear that the scratch resistance of the sample comprising the invention passivation layer is better than for the sample comprising the comparative passivation layer, and self-evidently much better than for the sample without passivation layer.

## Claims

1. Colour filter assemblage comprising on a transparent support,
(A) a colour filter array comprising a predefined pattern of colours,
(B) a passivation layer,
characterized in that said passivation layer comprises as main substance an anorganic-organic composite material wherein the anorganic phase is formed by controlled hydrolysis and polycondensation of a metal alkoxide according to the sol-gel process, and the organic phase is built in during said polycondensation by means of covalent bonds.

2. Colour filter assemblage according to claim 1 wherein said colour filter array is formed photographically by exposure according to a predefined pattern followed by colour development of three separate photographic silver halide emulsion layers coated on said support, and sensitive respectively to the three primary colours.

3. Colour filter assemblage according to claim 1 or 2 wherein the organic phase of the composite material consists of an organic polymer, containing at least one monomer functionalized with an alkoxy silane group.

4. Colour filter assemblage according to claim 3 wherein said alkoxysilane functionalizing said at least one monomer is a trialkoxysilane group.

5. Colour filter assemblage according to any of claims 1 to 4 wherein said metal alkoxide is an alkoxy silane having at least two alkoxide groups.

6. Colour filter assemblage according to claim 5 wherein said alkoxysilane having at least two alkoxide groups is a tetraalkoxysilane.

7. Colour filter assemblage according to claim 6 wherein said tetraalkoxysilane is tetraethoxysilane (TEOS).

8. Colour filter assemblage comprising on a transparent support,
(A) a colour filter array comprising a predefined pattern of colours,
(B) a passivation layer,
characterized in that said passivation layer comprises as main substance a polymer containing at least one monomeric unit functionalized with an alkoxysilane group which is crosslinked by controlled hydrolysis and polycondensation of said alkoxysilane functional groups themselves.

9. Colour filter assemblage according to claim 8 wherein said colour filter array is formed photographically by exposure according to a predefined pattern followed by colour development of three separate photographic silver halide emulsion layers coated on said support, and sensitive respectively to the three primary colours.

10. Colour filter array according to any of claims 1 to 9 wherein said transparent support is a glass support having a thickness comprised between 0.5 and 1.5 mm.

11. Method for the preparation of a colour filter assemblage as defined in claim 3 comprising the following steps :
(1) preparing a prepolymer by radical copolymerisation of an ethylenically unsaturated monomer with another monomer functionalized with a alkoxysilane group,
(2) preparing a coating solution containing said prepolymer prepared according to step 1 and a metal alkoxide,
(3) applying said coating solution on top of a colour filter array as defined in claim 1 by means of spin coating,
(4) hardening by further crosslinking said layer coated in step (3) by subjecting the thus obtained assemblage to a bake process.

12. Method according to claim 11 wherein said ethylenically unsaturated monomer present in step (1) is methylmethacrylate.

13. Method according to claim 11 or 12 wherein said monomer functionalized with a alkoxysilane group present in step (1) is methacroyloxypropyltrimethoxysilane.

14. Method according to any of claims 11 to 13 wherein said metal alkoxide present in the coating solution of said step (2) is an alkoxysilane.

15. Method according to claim 14 wherein said alkoxysilane is tetraethoxysilane (TEOS).

16. Method according to any of claims 11 to 15 wherein said aqueous solution of said step (2) further comprises a protonic acid as a catalyst.

17. Liquid crystal device comprising a colour filter assemblage according to any of claims 1 to 10.

18. Liquid crystal device comprising a colour filter assemblage prepared according to any of claims 11 to 16.
